Europäisches Patentamt

European Patent Office

Office européen des brevets

(19)

(11) Numéro de publication: **0 296 018**
**A1**

(12) **DEMANDE DE BREVET EUROPEEN**

(21) Numéro de dépôt: **88401371.5**

(22) Date de dépôt: **06.06.88**

(51) Int. Cl.⁴: **G 21 C 3/34**

(30) Priorité: **09.06.87 FR 8708006**

(43) Date de publication de la demande:
**21.12.88 Bulletin 88/51**

(84) Etats contractants désignés:
**BE CH DE ES GB LI SE**

(71) Demandeur: **FRAMATOME**
**Tour Fiat 1 place de la Coupole**
**F-92400 Courbevoie (FR)**

**COMPAGNIE GENERALE DES MATIERES NUCLEAIRES (COGEMA)**
**2, rue Paul Dautier B.P. 4**
**F-78141 Velizy-Villacoublay (FR)**

(72) Inventeur: **Muesca Bruno**
**Lotissement Le Coteau St Maurice de Courdans**
**01800 Meximieux (FR)**

**Denizou Jean-Pierre**
**15 Hameau des Amandines**
**69290 Craponne (FR)**

(74) Mandataire: **Bouget, Lucien et al**
**Cabinet Lavoix 2, Place d'Estienne d'Orves**
**F-75441 Paris Cédex 09 (FR)**

(54) **Grille-entretoise pour un assemblage combustible d'un réacteur nucléaire à eau légère.**

(57) La grille entretoise comporte au moins une plaque monobloc (1) traversée par un ensemble d'ouvertures (2) dont une partie au moins constitue un réseau régulier de logements (2) pour l'ensemble des crayons combustibles et des tubes-guides de l'assemblage. La grille-entretoise peut être constituée par une seule plaque monobloc (1) de forte épaisseur ou par l'association de plusieurs plaques monobloc disposées parallèlement les unes aux autres et liées entre elles par une ceinture extérieure.

FIG.5

## Description

### Grille-entretoise pour un assemblage combustible d'un réacteur nucléaire à eau légère

L'invention concerne une grille entretoise pour un assemblage combustible d'un réacteur nucléaire à eau légère.

Les assemblages combustibles des réacteurs nucléaires refroidis par de l'eau légère sont généralement constitués par un faisceau de crayons combustibles, c'est-à-dire de tubes en matériau ayant un faible pouvoir d'absorption des neutrons remplis par des pastilles de matière fissile. Le faisceau est généralement assemblé grâce à des pièces disposées à chacune des extrémités de l'assemblage. Pour le maintien transversal des crayons combustibles dans le faisceau, on utilise généralement des grilles-entretoises espacées suivant la longueur du crayon. Chacune des grilles-entretoises délimite un réseau régulier de logements destinés à recevoir les crayons combustibles ou des tubes-guides qui se substituent à certains crayons combustibles à l'intérieur du faisceau. Les tubes-guides sont généralement reliés aux pièces d'extrémité ou plaques disposées à chacune des extrémités de l'assemblage et assurent ainsi la cohésion et la rigidité de l'assemblage. De plus, les tubes-guides assurent le guidage de crayons absorbants qui sont reliés entre eux pour constituer des grappes qui peuvent être déplacées suivant la longueur de l'assemblage. Ces grappes ou barres de contrôle assurent le pilotage du réacteur nucléaire par leur déplacement suivant la hauteur du coeur du réacteur qui est généralement constitué par les assemblages placés côte à côte et à la verticale.

En outre, dans certains types de réacteur de conception récente désignés sous le nom de "réacteurs à variation de spectre", certains tubes-guides permettent d'introduire dans le coeur des barres de variation de spectre.

Dans les assemblages combustibles des réacteurs actuellement en service, en particulier des réacteurs nucléaires à eau sous pression, les grilles-entretoises sont généralement constituées par des plaquettes de tôle fine en alliage de zirconium assemblées entre elles par soudage. Chacune des plaques-entretoises est constituée d'environ quarante plaquettes qui sont obtenues à partir de tôle fine d'alliage de zirconium par découpage et emboutissage. Les plaquettes sont ensuite assemblées et liées entre elles pour constituer la grille-entretoise. L'assemblage d'une grille nécessite la réalisation d'environ sept cents soudures. De plus, des éléments rapportés peuvent être associés aux plaquettes pour réaliser le maintien des crayons combustibles dans les logements ou cellules de la grille.

Les grilles ainsi constituées conduisent à des intervalles de tolérances cumulés importants.

La structure d'une grille-entretoise d'un assemblage combustible pour réacteur refroidi à l'eau légère est donc extrêmement complexe et nécessite des opérations longues et coûteuses pour sa fabrication. De plus, l'évolution actuelle dans la conception des assemblages combustibles va dans le sens d'une augmentation de la densité du réseau des crayons combustibles, ce qui se traduit généralement en pratique par le passage d'un réseau à mailles carrées à un réseau à mailles triangulaires. Enfin, les grilles-entretoises doivent également remplir d'autres fonctions que le simple maintien transversal des barreaux combustibles, par exemple des fonctions de répartition et de mélange de l'eau de refroidissement en circulation dans l'assemblage.

Toutes ces exigences compliquent encore la conception et la fabrication des grilles-entretoises.

On connaît des éléments combustibles destinés à des réacteurs nucléaires refroidis par de l'eau lourde et constitués par des crayons cylindriques de matériau fissile ou fertile montés à l'intérieur d'une enveloppe tubulaire. Dans la demande de brevet Français 2.028.039, on décrit une entretoise pour un tel élément combustible constituée par une pièce en forme de disque usinée pour ménager des logements pour les crayons combustibles. Les zones de contact des logements avec les crayons combustibles sont constituées par des surfaces cylindriques dont le rayon de courbure est un peu supérieur au rayon de courbure des crayons combustibles.

De telles entretoises qui ont une symétrie rayonnante et qui comportent un faible nombre de logements pour les crayons combustibles ne sont pas du tout comparables à des grilles entretoises pour un assemblage combustible d'un réacteur nucléaire à eau légère dont les crayons sont disposés suivant un réseau dens à mailles carrées ou triangulaires. Par exemple un assemblage de réacteur nucléaire à eau sous pression renferme, dans une configuration courante, deux cent soixante quatre crayons combustibles disposés dans un réseau à mailles carrées et vingt cinq tubes-guides disposés de façon symétrique dans la grille.

En outre, les éléments combustibles auxquels sont destinées les entretoises décrites dans la demande de brevet 2.028.039 ne comportent dans de tubes-guides, sont placés en position horizontale dans le réacteur nucléaire et présentent une structure qui n'est absolument pas comparable à celle d'un assemblage pour réacteur à eau légère.

Le but de l'invention est donc de proposer une grille-entretoise pour un assemblage combustible d'un réacteur nucléaire à eau légère constitué par un faisceau de crayons combustibles parallèles dans lequel certains crayons sont remplacés par des tubes-guides et dont le maintien transversal est assuré par une pluralité de grilles-entretoises espacées suivant la longueur des crayons et délimitant chacune un réseau régulier de logements destinés à recevoir les crayons combustibles et les tubes-guides, cette grille entretoise ayant une structure simple et résistante pouvant être adaptée à tout type d'assemblage, quels que soient le type et les dimensions du réseau des crayons combustibles, et fabriquée par des opérations relativement simples et peu coûteuses faisant intervenir un nombre minimum d'opérations de soudage ou d'assemblage.

Dans ce but, la grille-entretoise suivant l'invention comporte au moins une plaque monobloc traversée par un ensemble d'ouvertures dont une partie au moins constitue un réseau de logements pour l'ensemble des crayons et des tubes-guides de l'assemblage.

Afin de bien faire comprendre l'invention, on va maintenant décrire, à titre d'exemples non limitatifs, en se référant aux figures jointes en annexe, plusieurs modes de réalisation d'une grille-entretoise suivant l'invention, destinée à un assemblage combustibles pour un réacteur nucléaire à eau sous pression.

La figure 1 est une vue partielle en plan d'une grille-entretoise suivant l'invention délimitant un réseau à mailles carrées.

La figure 2 est une vue à plus grande échelle d'une cellule de la grille représentée sur la figure 1.

Les figures 2a et 2b sont des vues analogues à la figure 2 de cellules destinées à recevoir des tubes-guides.

La figure 2c est une vue en perspective d'une partie des parois d'une cellule de la grille représentée sur les figures 1 et 2, suivant un mode de réalisation particulier.

La figure 3 est une vue partielle en plan d'une grille-entretoise suivant l'invention, de forme hexagonale et délimitant un réseau à mailles triangulaires.

La figure 4 est une vue à plus grande échelle d'une cellule de la grille représentée sur la figure 3.

Les figures 4a et 4b sont des vues analogues à la figure 4 de cellules destinées à recevoir des tubes-guides.

La figure 5 est une vue en perspective d'une grille-entretoise suivant l'invention réalisée sous la forme d'une seule plaque monobloc.

La figure 6 est une vue en perspective d'une grille-entretoise suivant l'invention réalisée à partir de plusieurs plaques monobloc.

Les figures 7a et 7b sont des vues en plan de cellules usinées dans des plaques monobloc constituant une grille-entretoise.

La figure 8 est une vue en perspective d'une grille-entretoise du type représenté sur la figure 6, suivant un mode d'assemblage par soudage.

La figure 9 est une vue en perspective d'une grille-entretoise du type représenté sur la figure 6 et suivant un mode d'assemblage par rivetage.

Les figures 9a et 9b sont des vues en coupe et à grande échelle de détails de la figure 9.

La figure 10 est une vue en perspective d'une grille-entretoise du type représenté sur la figure 6, suivant une seconde variante de réalisation.

La figure 11 est une vue schématique en plan d'une partie d'une grille-entretoise suivant l'invention comportant à la fois des logements pour des crayons combustibles et des trous de passage d'eau.

La figure 12 est une vue analogue à la figure 11 montrant diverses variantes de réalisation des logements de crayons combustibles et des trous de passage d'eau.

La figure 13 est une vue en élévation avec coupe partielle suivant 13-13 de la figure 12 d'un crayon combustibles dans une grille-entretoise suivant l'invention réalisée par poinçonnage.

La figure 14 est une vue en coupe suivant 14-14 de la figure 12, de la grille-entretoise, au niveau d'une ouverture de passage d'eau.

La figure 15 est une vue en élévation avec coupe partielle d'un crayon combustible et de la partie correspondante d'une grille entretoise suivant l'invention assurant le maintien axial du crayon combustible.

La figure 15a est une vue suivant A-A de la figure 15.

La figure 16a est une vue en élévation avec coupe partielle d'une partie périphérique d'une grille entretoise suivant l'invention.

La figure 16b est une vue en élévation avec coupe partielle d'une partie périphérique d'une grille entretoise suivant l'invention et suivant une variante de réalisation.

La figure 17 est une vue en perspective d'une grille-entretoise du type représentée sur la figure 6 et suivant une autre variante de fabrication.

La figure 18 est une vue en perspective d'une grille-entretoise du type de la grille représentée sur la figure 6 dont une plaque monobloc est remplacée par un réseau porte-ailettes de mélange.

La figure 18a est une vue en perspective d'une première variante de réalisation du réseau porte-ailettes de mélange.

La figure 18b est une vue en perspective d'une seconde variante de réalisation du réseau porte-ailettes de mélange.

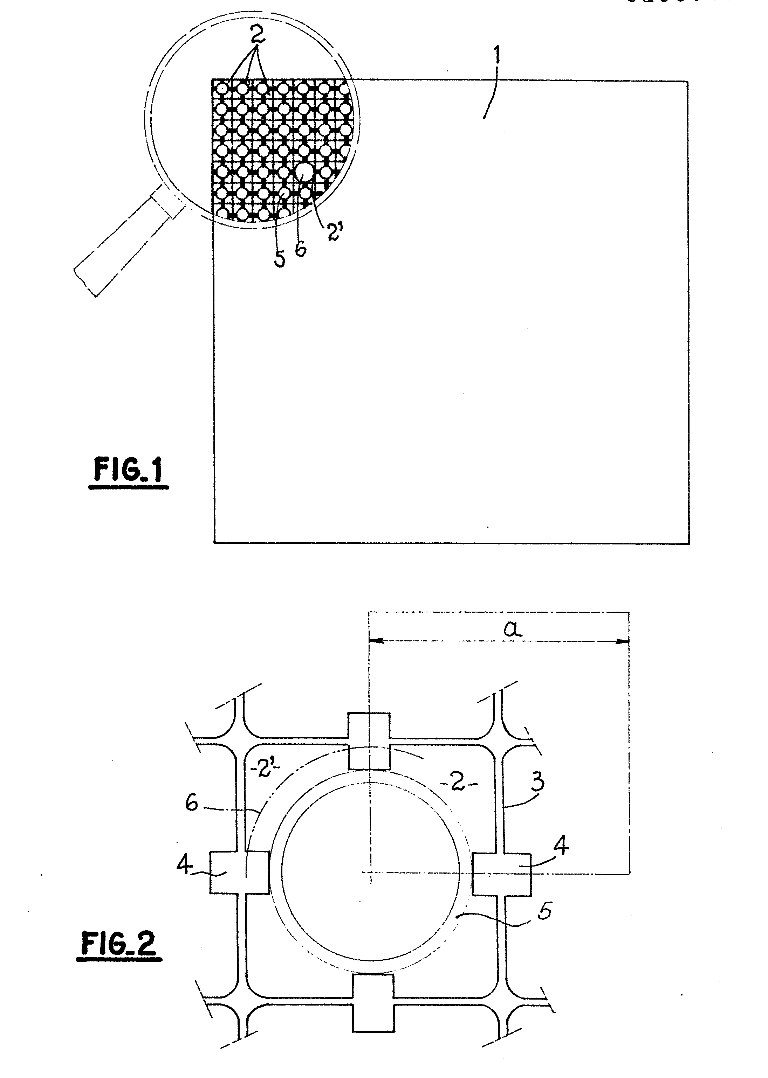

Sur la figure 1, on voit une plaque 1 percée d'un réseau d'ouvertures 2 sur toute son épaisseur et constituant ainsi une grille monobloc dont les parois et les cellules ont été réalisées par usinage de la plaque. Cet usinage peut être réalisé par l'un des procédés indiqués plus loin. Le réseau des ouvertures 2 constituant chacune une cellule de la grille est un réseau à mailles carrées dont le côté correspond à l'espacement des crayons combustibles dans un assemblage de réacteur nucléaire à eau sous pression. Pour un tel assemblage, le côté a de la maille du réseau a une longueur comprise entre 9 et 15 mm.

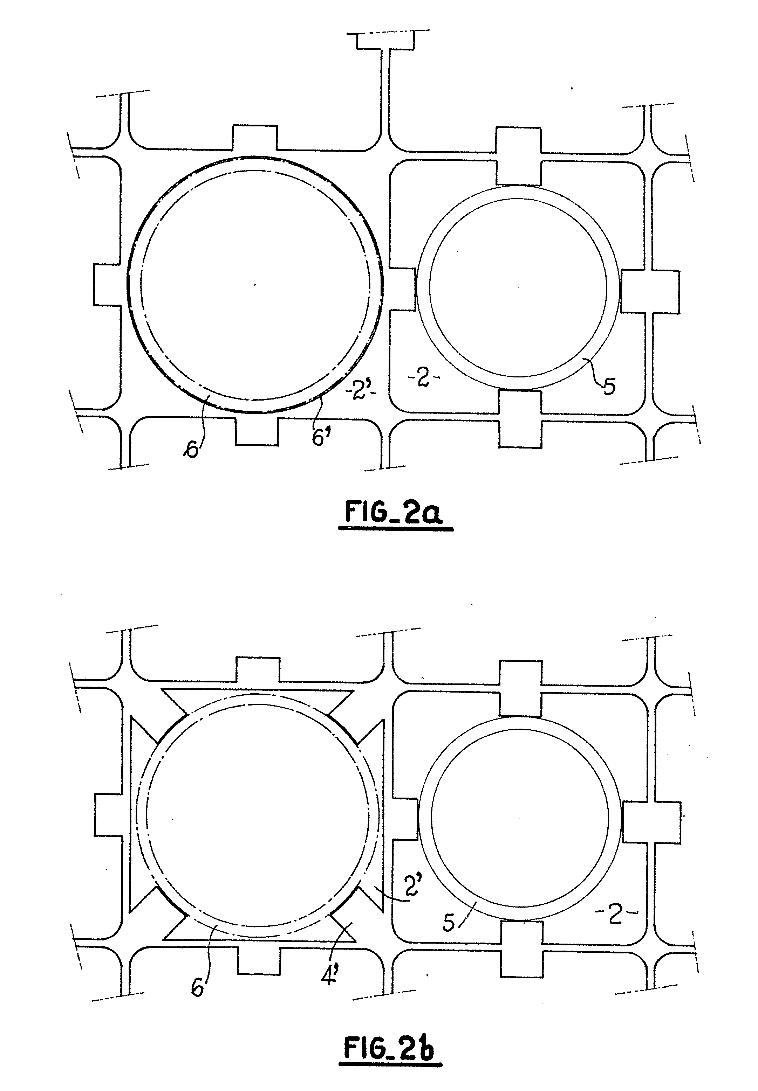

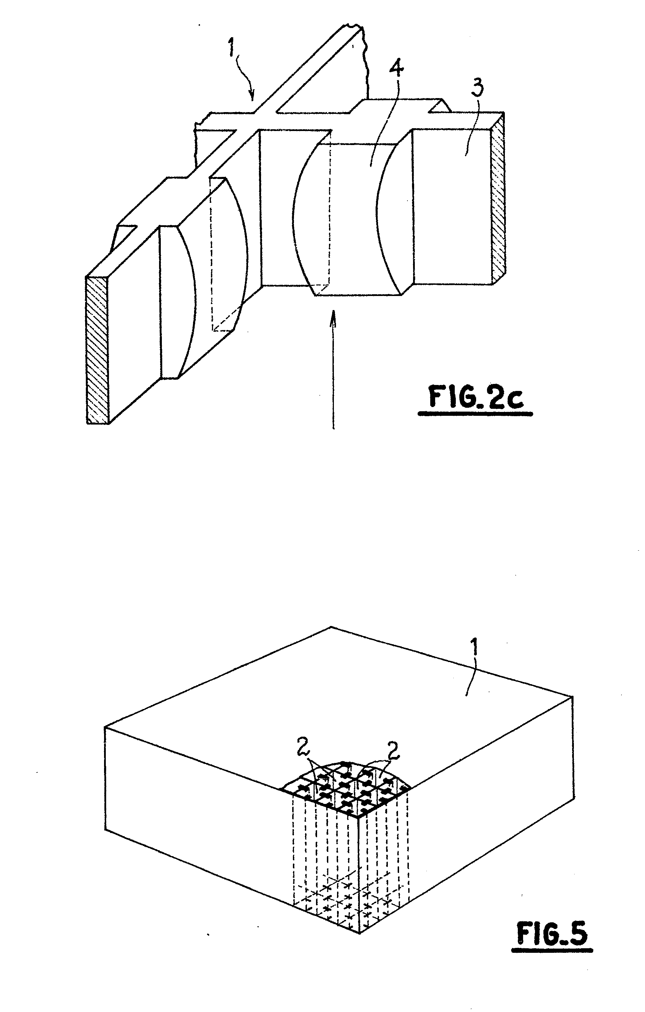

Comme il est visible sur les figures 1 et 2, les ouvertures 2 dans la plaque sont usinées de façon que les parois 3 des cellules de la grille présentent chacune à leur partie centrale une surépaisseur 4 saillante des deux côtés de la paroi 3, c'est-à-dire à l'intérieur de deux cellules 2 voisines. Ces parties 4 en surépaisseur constituent des bossettes d'appui pour les crayons combustibles 5. L'espace réservé entre les surfaces en vis-à-vis de deux bossettes 4 d'une même cellule 2 correspond sensiblement au diamètre extérieur d'un crayon combustible 5. Chacune des cellules 2 comporte deux jeux de deux bossettes opposées, si bien que chacun des crayons 5 est en appui suivant quatre génératrices opposées diamètralement deux à deux, à l'intérieur de la cellule 2 correspondante.

Les méthodes d'usinage utilisées doivent permettre d'obtenir des précisions importantes sur les cellules 2 et sur les pas entre cellules. Les procédés suivants peuvent être utilisés seuls ou associés : usinage par voie mécanique (perçage, formage, brochage, etc ...) ; usinage électrochimique, usinage par électro-érosion par fil ou par enfoncement, découpage laser, découpage par jets d'eau sous pression chargée d'abrasifs. Tous ces procédés doivent permettre l'obtention d'états de surface compatibles avec le contact du crayon ou du tube-guide.

A l'intérieur de certaines des cellules 2' de la grille, les parois 3 ne comportent pas de parties en saillie constituant des bossettes 4. Ces cellules 2' sont réservées aux tubes-guides 6 dont le diamètre est supérieur au diamètre des crayons combustibles 5.

Les cellules 2' peuvent également comporter des bossettes 4' ou des usinages permettant de réserver un passage 6' dont le diamètre correspond à celui d'un tube-guide 6, comme il est visible sur les figures 2a et 2b.

La plaque 1 est une plaque en appliage de zirconium dont on réalise le perçage de façon très précise pour constituer le réseau tel que représenté sur la figure 1. La méthode d'usinage de précision choisie dépend en particulier de l'épaisseur de la plaque 1, cette épaisseur pouvant être extrêmement variable suivant le mode de réalisation de la grille entretoise, comme il sera décrit ci-dessous.

Dans le cas d'une grille entretoise d'un assemblage combustible standard d'un réacteur nucléaire à eau sous pression, de type 17 x 17, la plaque 1 comportera deux cent quatre-vingt neuf ouvertures 2 constituant deux cent quatre-vingt neuf cellules de la grille monobloc obtenue après usinage.

Généralement, les parois 3 de la grille ont une épaisseur comprise entre 0,3 et 1 mm et l'espace séparant les faces en regard des bossettes 4 a une longueur comprise entre 8,5 et 15 mm.

L'eau de refroidissement du réacteur nucléaire traverse les plaques 1 de maintien des crayons combustibles 5, dans la direction axiale des crayons combustibles, c'est-à-dire dans une direction perpendiculaire au plan des figures 1 et 2.

Pour diminuer la perte de charge de l'eau de refroidissement lors de sa traversée de l'assemblage, au passage de chacune des plaques 1, on peut usiner les bossettes 4 suivant une forme profilée telle que par exemple celle représentée sur la figure 2c. Ces bossettes 4 ont une surface convexe pratiquement cylindrique dirigée vers l'intérieur des cellules 2. D'autres formes en "goutte d'eau" sphérique ou ovoïde peuvent être envisagées pour faciliter l'écoulement du fluide. Ces formes sont telles que la surface projetée de la bossette 4 dans le plan de la plaque 1 soit la plus faible possible.

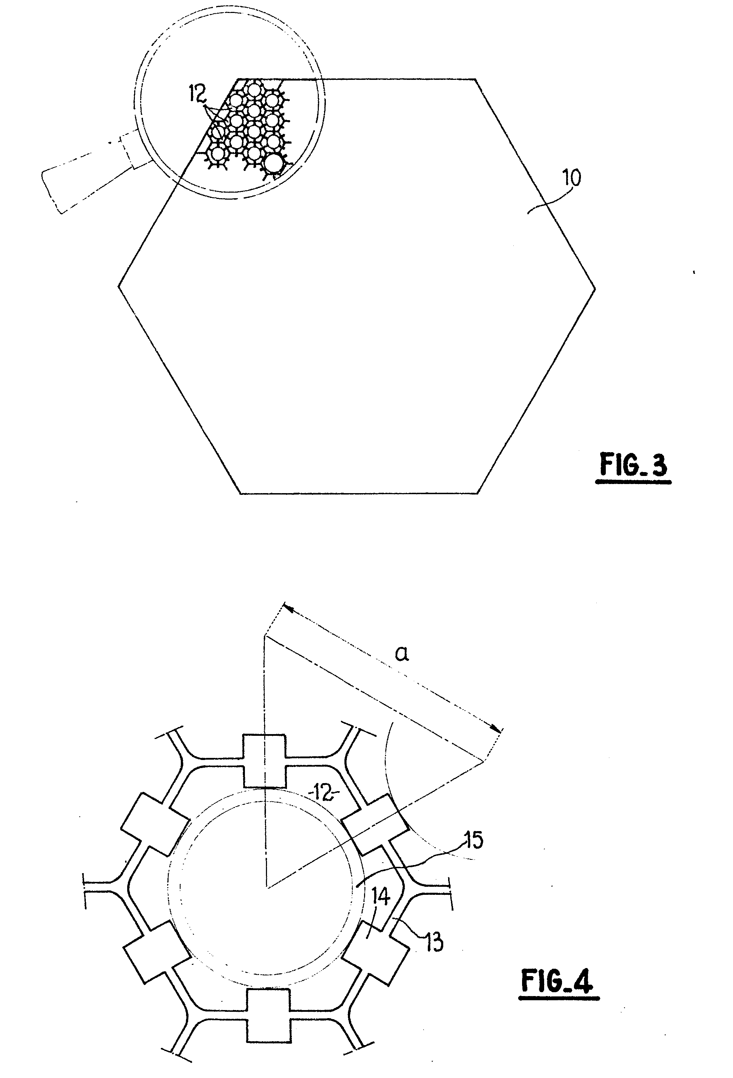

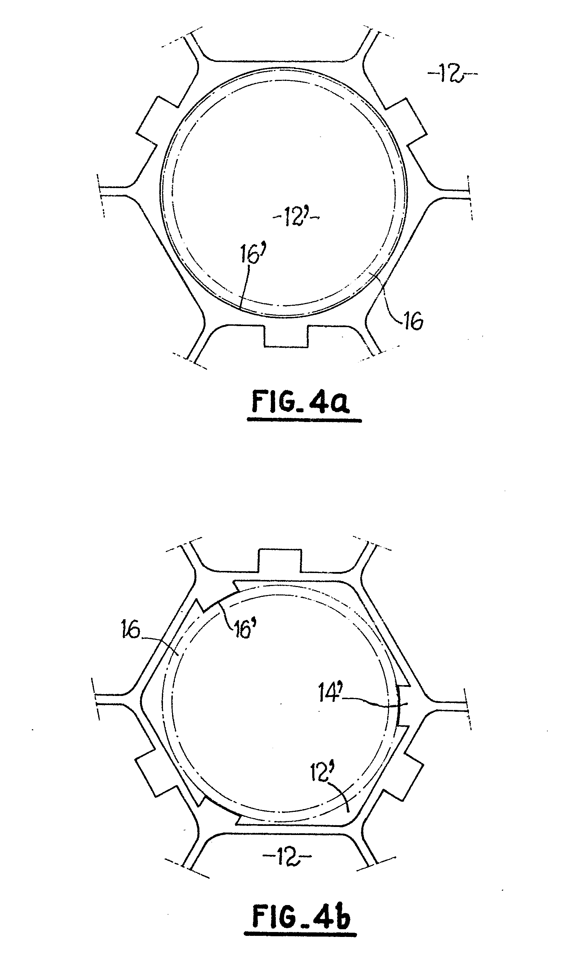

Sur les figures 3 et 4, on a représenté un second type de plaque perforée 10 constituant une grille monobloc ayant un réseau de cellules 12 dont la maille est triangulaire. Cette maille a la forme d'un triangle équilatéral dont le côté a a pour longueur la distance entre deux crayons 15 voisins de l'assemblage. La distance a est comprise entre 9 et 13 mm. Les parois 13 de chacune des cellules 12 de la grille 10 comportent une partie 14 en surépaisseur constituant une bossette d'appui pour les crayons combustibles 15. Chacune des cellules 12 de forme hexagonale comporte ainsi six bossettes d'appui 14 pour le crayon 15 placé dans cette cellule 12. L'espace séparant les faces en regard des bossettes 14, à l'intérieur d'une cellule 12 est, comme précédemment, sensiblement égal au diamètre extérieur d'un crayon combustible ou au diamètre extérieur du tube-guide.

Dans le cas d'un assemblage pour un réacteur nucléaire à eau sous pression, on a prévu trois cent trente et une cellules 12 correspondant chacune à une ouverture traversant la plaque 10 dont trente sept cellules sont destinées à recevoir des tubes-guides. L'épaisseur des parois 13 est, comme précédemment, comprise entre 0,3 et 1 mm et l'espace entre les bossettes 14 a une longueur de 8 à 10 mm. Les plaques telles que 1 et 10 qui viennent d'être décrites peuvent constituer à elles seules une grille entretoise pour un assemblage combustible de réacteur nucléaire. Dans ce cas, les plaques dans lesquelles on effectue l'usinage des ouvertures 2 sont de forte épaisseur pour apporter une résistance mécanique suffisante à la grille (résistance à l'écrasement) et également afin d'éviter toute interférence avec les grilles des assemblages combustibles voisins dans le coeur.

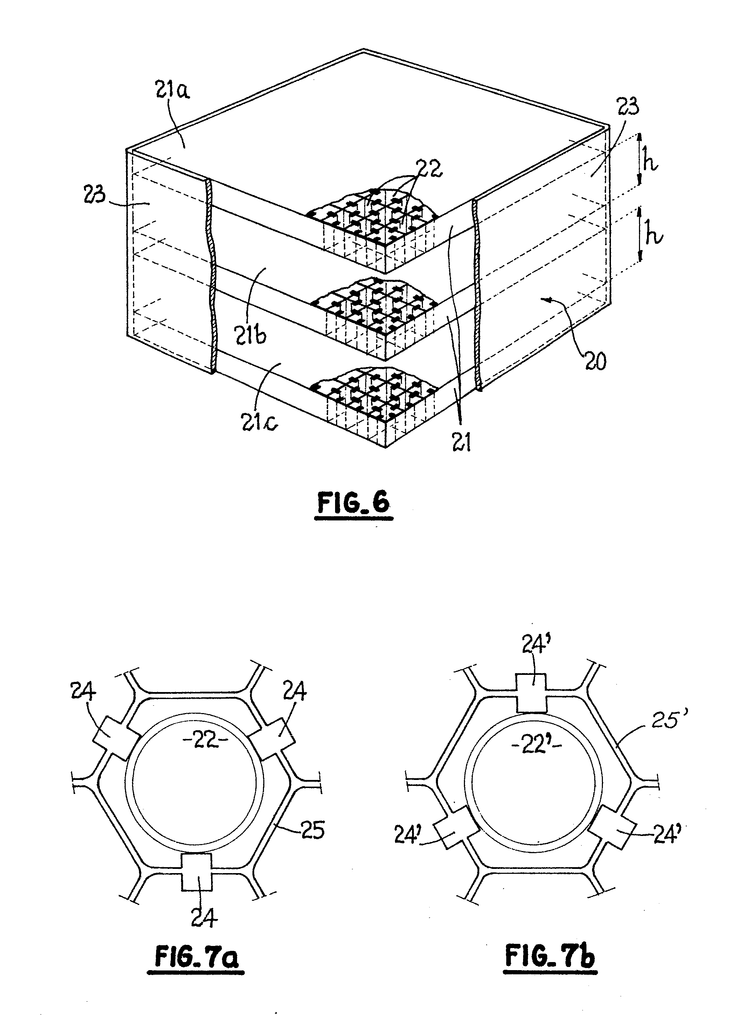

Une telle plaque 1 de forte épaisseur dans laquelle ont été usinées des ouvertures 2 et constituant à elle seule une grille-entretoise a été représentée sur la figure 5. Une telle plaque 1 peut avoir une épaisseur allant jusqu'à 70 mm. Une plaque en alliage de zirconium de forme carrée et d'épaisseur voulue est usinée, par exemple par l'un des procédés dé crits précédemment, pour réaliser, sur toute l'épaisseur de cette plaque, un réseau à mailles carrées d'ouvertures 2 dont la forme est représentée sur les figures 1 et 2.

Il est bien évident qu'on peut réaliser de la même façon avec une plaque de forte épaisseur pouvant aller jusqu'à 70 mm, une grille monobloc à mailles triangulaires telle que représentée sur les figures 3 et 4.

Dans le réseau d'ouvertures traversant la plaque de forte épaisseur, certaines ouvertures 12' pourront être réservées pour le passage et la fixation de tubes-guides. Les passages de tubes-guides 16' pourront par exemple avoir des formes telles que celles présentées sur les figures 4a et 4b et comporter des bossettes 14'.

Afin de supprimer tout risque d'accrochage entre grilles entretoises d'assemblage adjacentes, les coins de la plaque monobloc, comme représenté sur la figure 5, peuvent être usinés pour présenter des formes telles celles définies dans la demande de brevet n° FR-86-04708.

Un assemblage combustible d'un réacteur nucléaire à eau sous pression pourra comporter plusieurs grilles-entretoises constituées sous forme monobloc et disposées dans des positions espacées suivant la longueur de l'assemblage. Un assemblage d'une longueur voisine de 4 m̊ pourra comporter de huit à douze grilles- entretoises telles que représentées sur la figure 5.

Sur la figure 6, on a représenté un second type de grille-entretoise suivant l'invention. Dans ce mode de réalisation, la grille-entretoise 20 est constituée par trois plaques 21a, 21b, 21c disposées pa rallèlement les unes aux autres et séparées par une distance verticale variable h̲ (par exemple comprise entre 10 et 70 mm). Les plaques 21a, 21b, 21c sont assemblées grâce à des plaquettes 23 constituant la ceinture extérieure de la grille-entretoise.

Chacune des plaques 21a, 21b et 21c constituent une grille monobloc telle que représentée sur les figures 1 et 2. Chacune des plaques est percée d'un ensemble d'ouvertures 22 disposées suivant un réseau à mailles carrées et constituant les cellules d'une grille monobloc, comme décrit plus haut. Les plaques 21a, 21b, 21c sont reliées par les plaquettes de ceinture 23 de façon que les réseaux d'ouvertures 22 soient disposés dans des positions correspondantes et se déduisant les unes des autres par une translation suivant la direction perpendiculaire aux plaques 21. Les ouvertures 22 correspondantes des trois réseaux des plaques 21a, 21b, 21c sont donc alignées suivant la direction perpendiculaire aux plaques qui est sur la figure 6 la direction verticale. Les crayons combustibles ou les tubes-guides pourront donc être reçus dans la grille-entretoise 20, chacun à l'intérieur de trois ouvertures 22 successives dans des positions correspondantes sur les plaques 21a, 21b et 21c.

L'ensemble de la grille-entretoise 20 sera réalisé en tôle en alliage de zirconium, les plaques 21a, 21b et 21c pouvant avoir alors une épaisseur réduite par rapport à la réalisation d'une grille-entretoise à partir d'une seule plaque monobloc, comme représenté sur la figure 5. Pour des questions de rigidité et d'efficacité du maintien transversal des crayons, cette épaisseur sera comprise entre 2 et 15 mm.

Il est bien évident que, dans le mode de réalisation de la figure 6, les plaques monobloc 21a, 21b et 21c pourront être soit des plaques de forme carrée comportant un réseau d'ouvertures 22 à mailles carrées comme représenté sur les figures 1 et 2, soit des plaques de forme hexagonale présentant un réseau d'ouvertures à mailles triangulaires comme représenté sur les figures 3 et 4, soit encore des plaques de toute autre forme présentant des ouvertures disposées suivant un réseau régulier permettant de recevoir des crayons combustibles et des tubes-guides.

Il est bien évident également que le nombre de plaques constituant la grille-entretoise pourra être différent de trois et par exemple égal à deux.

Sur les figures 7a et 7b, on a représenté deux cellules 22 et 22' de deux grilles monobloc assemblées pour constituer une grille-entretoise telle que représentée sur la figure 6. Les deux cellules 22 et 22' représentées ont une forme hexagonale et sont placées dans des réseaux à mailles triangulaires. Ces deux cellules 22 et 22' sont placées dans des positions correspondantes, sur la plaque ou grille monobloc supérieure et sur la plaque ou grille monobloc inférieure respectivement.

On voit que seule une paroi 25 (ou 25') sur deux des cellules 22 (ou 22') comporte une bossette 24 (ou 24'). En outre, les bossettes 24 de la cellule 22 de la plaque supérieure sont disposées dans des positions décalées angulairement par rapport aux positions des bossettes 24' de la plaque inférieure.

De cette manière, chacune des plaques ou grilles monobloc peut être réalisée sous une forme allégée, par rapport à la forme représentée sur les figures 3 et 4. Ceci a pour avantage de diminuer la per te de charge de la grille et permet un meilleur refroidissement du crayon combustible. Les crayons combustibles seront néanmoins maintenus à l'intérieur de la grille-entretoise correspondante, en des points situés sur six génératrices différentes. On obtient ainsi un appui et un maintien transversal efficace des crayons combustibles de l'assemblage au niveau de la grille entretoise.

Dans le cas d'une grille entretoise constituée par une seule plaque de forte épaisseur usinée sous la forme d'une grille monobloc dont les cellules ont une forme hexagonale et sont disposées suivant un réseau à mailles triangulaires, il est également possible de prévoir des bossettes d'appui des crayons seulement sur une paroi sur deux de chacune des cellules.

Comme pour la grille 5 il est intéressant, afin de supprimer tout risque d'accrochage entre grille entretoises d'assemblage adjacentes, de donner aux coins des formes telles que celles présentées dans la demande de brevet 86-04708.

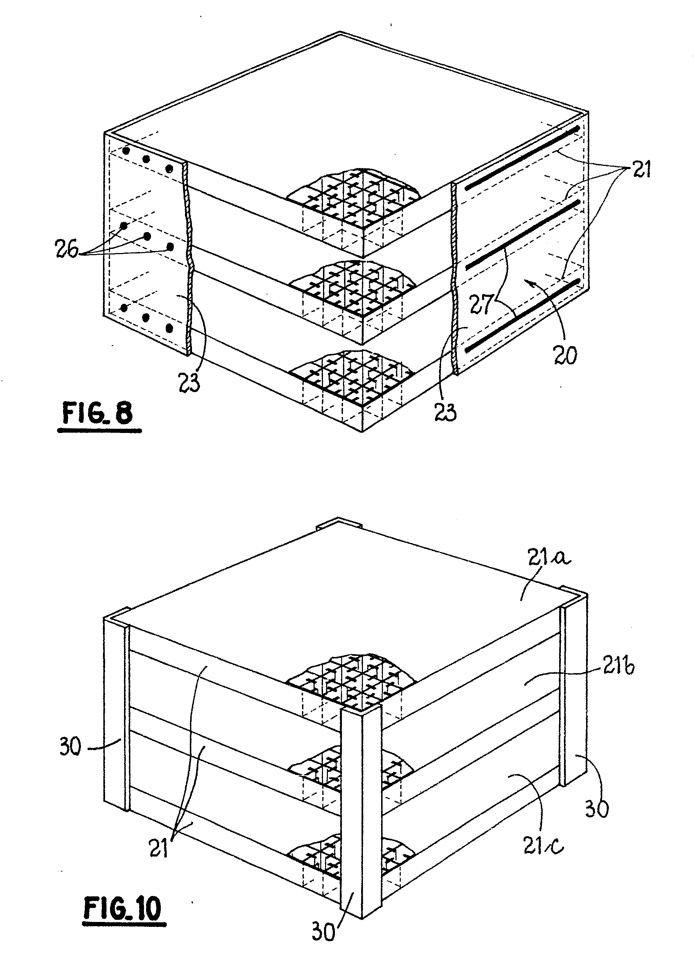

Sur la figure 8, on a représenté une grille entretoise 20 réalisée de la même façon que la grille représentée sur la figure 6. Les plaques 21a, 21b, 21c constituant des grilles monobloc en alliage de zirconium sont assemblées par des plaquettes en alliage de zirconium 23 qui sont soudées sur le bord des plaques 21.

Les soudures peuvent être réalisées "par transparence" c'est-à-dire depuis l'extérieur des plaques 23. Ces soudures peuvent être réalisées par points 26 alignés suivant le bord des plaques 21 ou constituer des cordons 27 dirigés suivant les bords de plaque 21.

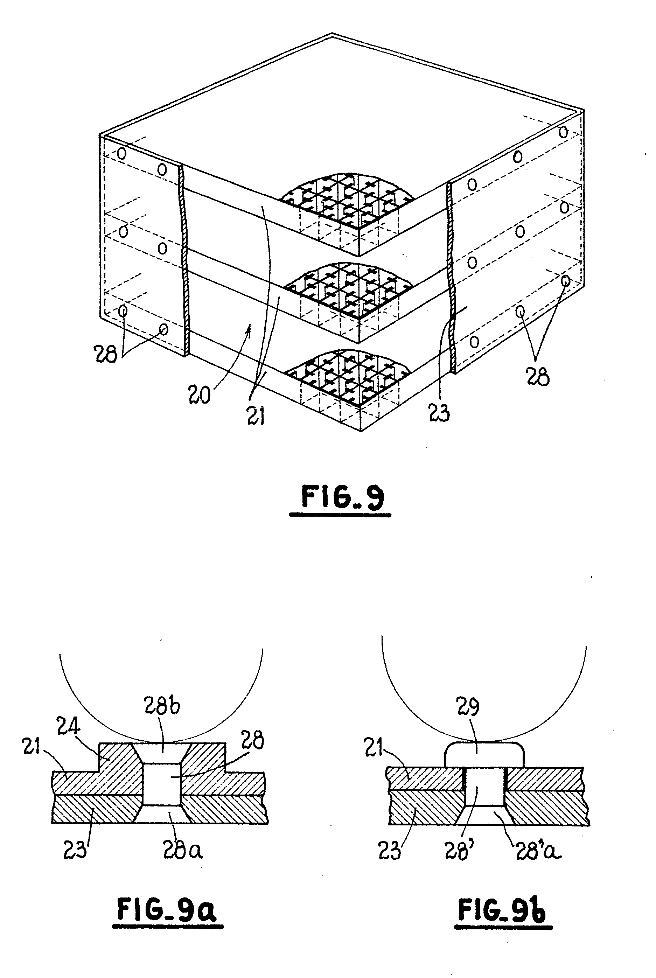

Sur la figure 9, on a représenté un autre mode d'assemblage des plaques 21 et des plaquettes de ceinture 23 d'une grille-entretoise 20. Les plaquettes de ceinture 23 sont fixées sur le bord des plaques 21 par des rivets 28.

Comme il est visible sur la figure 9a montrant le détail d'un rivet 28, ce rivet comporte des têtes 28a et 28b noyées dans la plaquette 23 et dans le métal en surépaisseur de la plaque 21 constituant une bossette 24 d'une cellule.

De cette manière, les rivets 28 ne comportent aucune partie saillante ni à l'extérieur ni à l'intérieur de la grille-entretoise. En effet, la surface extérieure des grilles-entretoises doit être parfaitement lisse et ne comporter aucune partie en saillie qui pourrait se montrer gênante, au moment de la manutention de l'assemblage dans le coeur du réacteur. De même, les parties en saillie interdiraient une mise en contact parfaite des faces latérales des assemblages qui sont disposées côte à côte dans le coeur du réacteur.

Sur la figure 9b, on a représenté un rivet 28' qui comporte une tête 28'a noyée dans la plaquette de ceinture 23 de la grille-entretoise 20 et une tête 29 saillante à l'intérieur d'une cellule de la plaque ou grille monobloc 21. Dans ce cas, la paroi correspondante de la cellule de la grille 21 ne comporte pas de bossette, celle-ci étant remplacée par la tête 29 du rivet 28'.

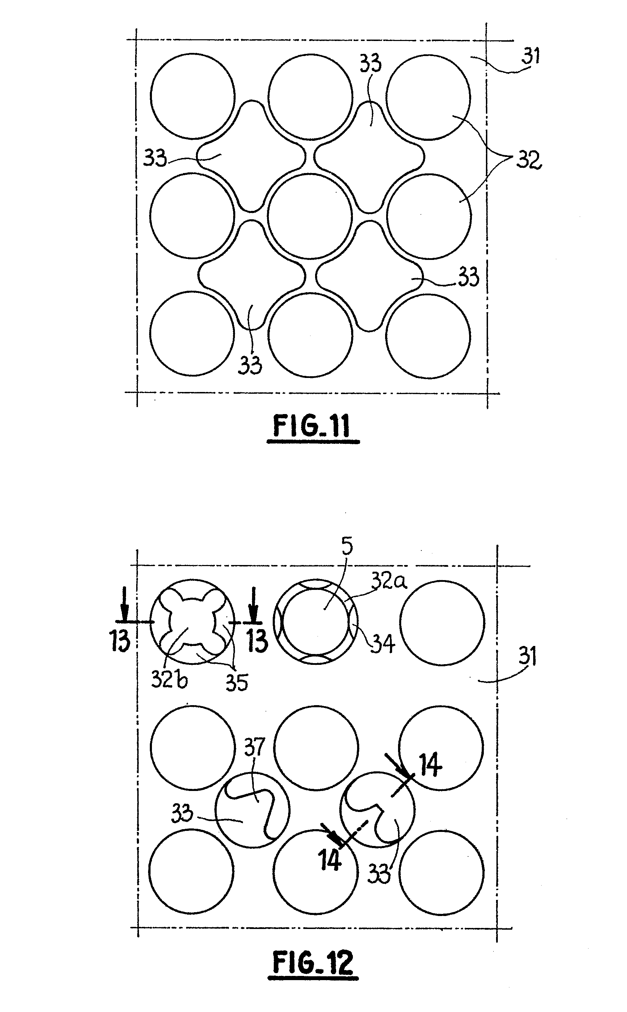

Sur la figure 10, on a représenté une variante de réalisation d'une grille-entretoise constituée de trois plaques 21a, 21b et 21c disposées l'une au-dessus de l'autre et constituant des grilles monobloc dont les cellules 2 sont disposées suivant des réseaux ayant des positions correspondantes dans la direction perpendiculaires aux plaques 21a, 21b et 21c.

Les plaques 21a, 21b et 21c sont reliées et assemblées, dans le mode de réalisation représenté sur la figure 10, par des cornières d'angle 30 au lieu de plaquettes de ceinture 23, comme dans les modes de réalisation représentés sur les figures 6, 8 et 9.

Comme dans les modes de réalisation précédents, les grilles monobloc 21a, 21b, 21c peuvent être réalisées à partir de plaques en alliage de zirconium d'une épaisseur comprise entre 2 et 15 mm. Les cornières d'angle sont elles-mêmes en alliage de zirconium et sont liées par soudure, soit par points, soit par cordons ou encore par rivetage, au bord des plaques 21.

Dans tous les modes de réalisation décrits jusqu'ici, l'ensemble des cellules des grilles monobloc constituant la grille-entretoise était destiné à recevoir soit un crayon combustible, soit un tube-guide. A l'intérieur de chacune des cellules des grilles, des passages d'eau sont prévus autour du crayon ou du tube-guide, pour permettre la circulation de l'eau de refroidissement du réacteur nucléaire, à l'intérieur de l'assemblage, dans le réacteur en fonctionnement.

Sur la figure 11, on a représenté une partie d'une plaque 31 usinée pour constituer une grille monobloc et comportant des ouvertures 32 et 33 de deux types différents.

Les ouvertures 32 qui sont comparables aux ouvertures 2, 12 et 22 décrites ci-dessus et qui constituent les cellules de la grille sont destinées à recevoir des crayons combustibles ou des tubes-guides. Les ouvertures 33 sont de simples ouvertures de passage d'eau à travers la plaque 31, sont intercalées entre les ouvertures 32 et présentent une forme plus ou moins complexe permettant d'obtenir une épaisseur de paroi des cellules de la grille monobloc la plus constante possible.

Sur la figure 12, on a représenté deux variantes de réalisation 32a et 32b des ouvertures 32 destinées à recevoir un crayon combustible. L'ouverture 32a est réalisée par perçage et présente une forme circulaire et un diamètre supérieur au diamètre extérieur du crayon 5. Des bossettes 34 usinées en saillie vers l'intérieur de l'ouverture 32a permettant le maintien transversal du crayon 5. Le type d'ouverture 32a constitue une cellule de la grille 31 tout-à-fait comparable aux cellules des modes de réalisation déjà décrits.

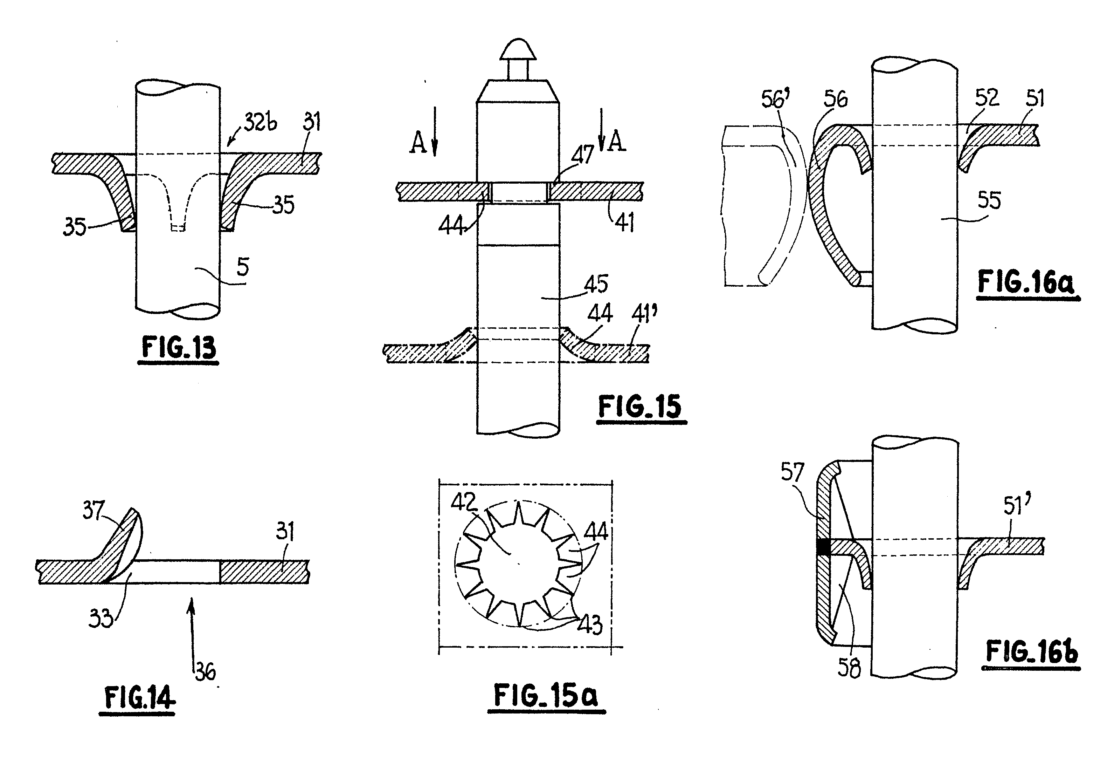

Quand l'épaisseur de la grille est faible, l'ouverture 32b peut être réalisée par poinçonnage de la grille 31 et comporter quatre parties 35 repoussées en dehors du plan de la plaque 31, comme il est visible sur la figure 13 où l'on a représenté un crayon 5 en position à l'intérieur d'une ouverture 32b, ce crayon 5 étant maintenu par les parties repoussées 35 de la plaque 31, au niveau de l'ouverture 32b. On peut ainsi utiliser, pour constituer une grille-entretoise, des plaques 31 d'une épaisseur relativement faible qui est percée et poinçonnée pour constituer une grille monobloc.

De la même façon, les ouvertures 33 de passage d'eau sont réalisées par poinçonnage et repoussage d'une ailette 37 constituée par le métal de la plaque 31. La plaque 31 a été représentée en coupe sur la figure 14 au niveau d'une ouverture 33. On voit que l'ailette 37 est repoussée vers le haut, c'est-à-dire dans le sens opposé au sens de repoussage des parties 35 de maintien du crayon 5 représenté sur la figure 13.

L'ailette 37 permet la déflexion et le mélange de l'eau de refroidissement du réacteur nucléaire circulant dans l'assemblage suivant le sens de la flèche 36, lorsque l'assemblage comportant la plaque-entretoise 31 est disposé dans le coeur du réacteur.

Les dispositions des figures 13 et 14 peuvent être utilisées indépendamment l'une de l'autre ou simultanément sur une même grille, assurant la fonction que l'on veut faire jouer à la grille entretoise (fonction de mélange et de résistance mécanique).

Sur les figures 15 et 15a, on voit un mode de réalisation d'une grille-entretoise monobloc suivant l'invention comportant un moyen d'immobilisation axiale d'un crayon 45 de l'assemblage dans lequel est montée la grille monobloc 41.

La grille 41 comporte, pour le maintien et la fixation du crayon 45, une ouverture 42 constituée par une découpe centrale de forme circulaire et des découpes 43 prolongeant l'ouverture centrale dans des directions radiales. Les découpes 43 limitent des languettes 44 constituées par le métal de la plaque 31.

Comme il est visible dans la partie inférieure de la figure 15 (position 41' de la plaque 41), le crayon 45 peut être introduit dans l'ouverture 42, les languettes 44 ayant une souplesse suffisante pour être repoussées vers l'extérieur.

Le crayon 45 comporte d'autre part dans sa partie supérieure une gorge 47 dans laquelle les languettes 44 de l'ouverture 42 sont engagées lorsque le crayon est dans sa position définitive par rapport à la plaque-entretoise 41, comme représenté dans la partie supérieure de la figure 15 (position 41 en traits pleins de la plaque).

Pour cela, lorsque l'ouverture 42 et les languettes 44 ont été mises en coïncidence avec la gorge 47, par glissement du crayon 45 à l'intérieur de l'ouverture 42, les languettes 44 sont rabattues dans le plan de la plaque 41, pour venir à l'intérieur de la gorge 47. Le crayon 45 est alors immobilisé dans la direction axiale, à l'intérieur de l'assemblage combustible.

On prévoit généralement une seule grille-entretoise 41 comportant des ouvertures telles que l'ouverture 42 pour l'immobilisation axiale des crayons 45, cette grille-entretoise étant la grille supérieure de l'assemblage.

Sur les figures 16a et 16b, on a représenté deux modes de réalisation différents de la partie périphérique d'une grille-entretoise suivant l'invention.

Sur la figure 16a, la grille-entretoise 51 qui est réalisée sous une forme monobloc, par poinçonnage et repoussage d'une plaque en alliage de zirconium, pour constituer des ouvertures 52 de maintien des crayons combustibles 55, comporte des bords 56 rabattus vers le bas destinés à constituer la ceinture de la grille-entretoise. La forme de cette ceinture permet de faciliter les opérations de manutention grâce à des formes arrondies.

De plus, des formes en pont telles que représentées à la figure 16a confèrent à la grille une élasticité qui permet d'absorber les dilatations différentielles des assemblages tout en assurant leur positionnement.

Dans le cas d'une grille-entretoise de forme polygonale, par exemple de forme carrée, les bords de la grille-entretoise correspondant aux côtés du polygone sont rabattus vers le bas et soudés à leurs extrémités pour constituer la ceinture de la grille-entretoise.

On a représenté dans la position 56' une partie de la ceinture d'une grille-entretoise d'un assemblage combustible voisin de l'assemblage dans lequel est montée la grille 51. On voit que les parties 56 et 56' de forme courbe viennent en contact pour réaliser le positionnement et le centrage des assemblages l'un par rapport à l'autre et faciliter leurs déplacements relatifs.

Sur la figure 16b, on voit un second mode de réalisation de la ceinture d'une grille-entretoise 51' suivant l'invention, cette ceinture 57 étant rapportée et soudée sur les côtés externes de la grille-entretoise 51'. Des renforts 58 soudés sur la plaque 51' et la ceinture 57 permettent d'augmenter la rigidité de la ceinture 57.

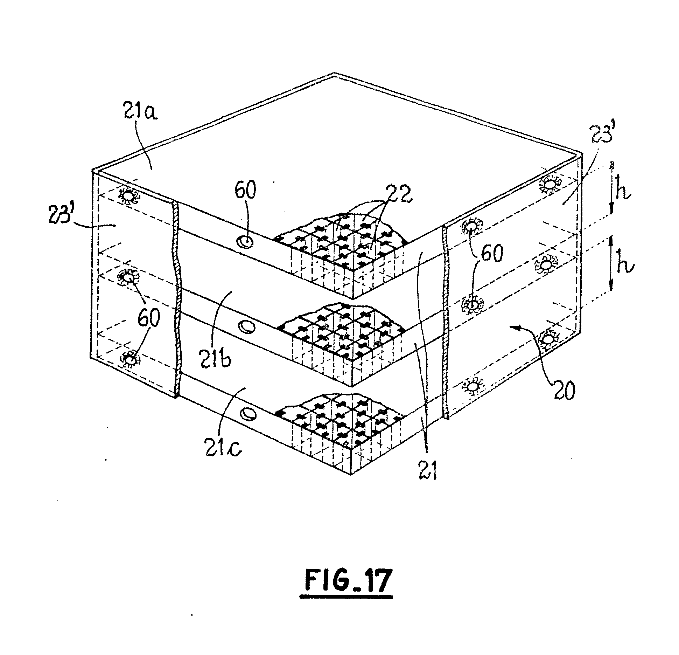

Sur la figure 17 on a représenté une variante de réalisation d'une grille-entretoise constituée de trois plaques 21a, 21b et 21c disposées l'une au-dessus de l'autre et constituant des grilles monobloc dont les cellules 2 sont disposées suivant des réseaux ayant des positions correspondantes dans la direction perpendiculaire aux plaques 21a, 21b et 21c.

Les plaques 21a, 21b et 21c sont reliées et assemblées, dans le mode de réalisation représenté sur la figure 17, grâce à une ceinture extérieure constituée par un tube carré 23' en alliage de zirconium dans lequel sont enfilées les plaques 21a, 21b et 21c. La liaison est assurée par une déformation mécanique de la ceinture extérieure constituée par le tube 23' dans des logements 60 ménagés à cet effet dans un des côtés des plaques 21a, 21b et 21c.

La liaison pourrait être également réalisée à l'aide de soudures ou de rivetages.

Un tel principe de grille peut évidemment être adapté au cas de plaques 21a, 21b et 21c de forme hexagonale.

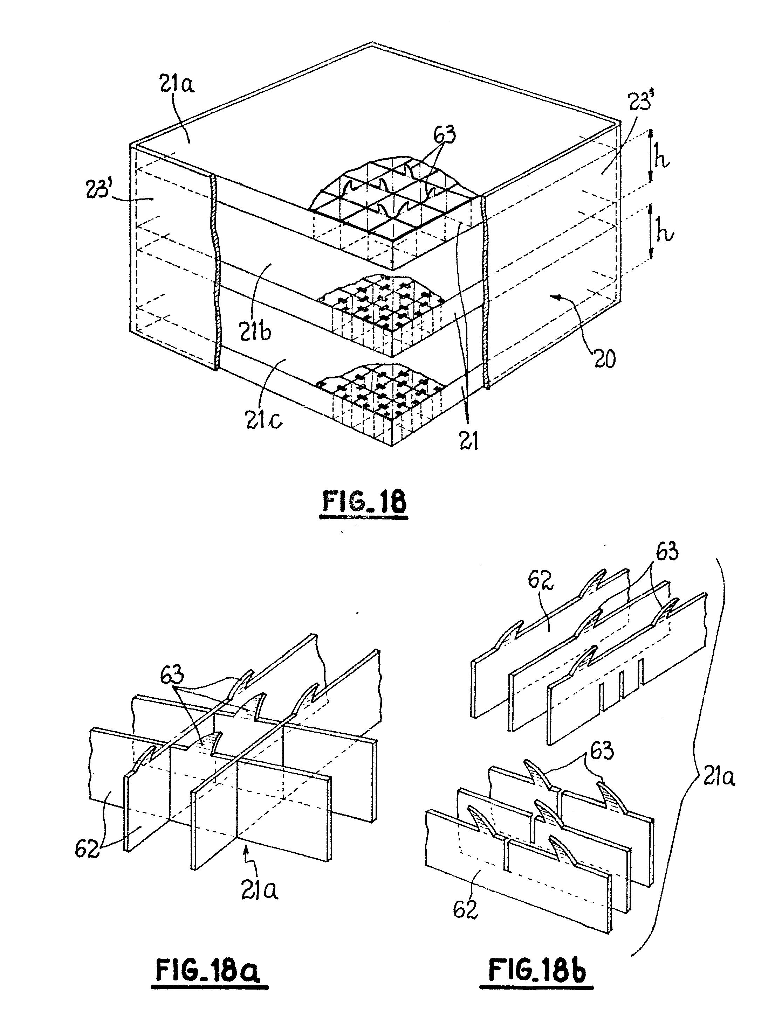

Sur la figure 18, on a représenté une variante de réalisation d'une grille-entretoise constituée de trois plaques 21a, 21b et 21c disposées l'une au-dessus de l'autre et constituant des grilles monobloc dont les cellules 2 sont disposées suivant des réseaux ayant des positions correspondantes dans la direction perdiculaires aux plaques 21a, 21b et 21c.

La plaque 21a par exemple peut avoir une fonction de mélange du fluide réfrigérant alors que les plaques 21b et 21c conservent une fonction de maintien du crayon combustible ou du tube-guide.

La plaque 21a peut par exemple être réalisée suivant les solutions présentées sur les figures 11 et 12 ou encore à partir de plaquettes embouties 62 en un alliage de zirconium dont la seule fonction est de supporter des ailettes de mélange du fluide 63 (figures 18a et 18b).

La plaque 21a constitue ainsi un simple réseau porte-ailettes 62, 63.

Les plaquettes 62 peuvent être imbriquées entre elles selon le principe de la figure 18a ou réparties sur deux niveaux comme représenté sur la figure 18b.

L'assemblage de tous les composants de la grille entretoise ainsi constituée peut se faire comme pour les grilles des figures 6, 8, 9, 10 et 17.

On voit sur les exemples de réalisation qui ont été décrits que les grilles-entretoises suivant l'invention ont une structure simple et peuvent être réalisées en effectuant un très faible nombre de soudures ou même sans opération de soudage. D'autre part, les grilles-entretoises suivant l'invention peuvent remplir de nombreuses fonctions, en plus du maintien des crayons et comporter un réseau très dense de logements pour les crayons combustibles et les tubes-guides.

L'invention ne se limite pas aux modes de réalisation qui ont été décrits.

C'est ainsi qu'on peut imaginer d'autres formes de logement pour les crayons combustibles traversant les plaques monobloc de la grille-entretoise et d'autres modes d'assemblages des plaques monobloc.

On peut également imaginer d'autres formes de bossette et plus généralement d'autres modes de réalisation de moyens de maintien des crayons dans les grilles monobloc.

On peut également imaginer tout autre ouverture dans les plaques de la grille-entretoise ayant des fonctions diverses, par exemple de répartition et de mélange du fluide de refroidissement circulant dans l'assemblage combustible.

On peut imaginer toute forme de réseau régulier suivant lequel seront disposés les logements des crayons dans les grilles-entretoises.

Enfin, les grilles-entretoises suivant l'invention pourront être utilisées pour des assemblages combustibles destinés à des réacteurs nucléaires de tout type refroidis par de l'eau légère, que ces réacteurs soient à eau sous pression, à eau bouillante ou à variation de spectre.

**Revendications**

1.- Grille-entretoise pour un assemblage combustible d'un réacteur nucléaire à eau légère constitué par un faisceau de crayons combustibles parallèles dans lequel certains crayons (5) sont remplacés par des tubes-guides (6) et dont le maintien transversal est assuré par une pluralité de grilles-entretoises (1, 20) espacées suivant la longueur des crayons (5) et délimitant chacune un réseau régulier de logements (2, 12, 22) destinés à recevoir les crayons combustibles (5) et les tubes-guides (6), caractérisée par le fait qu'elle comporte au moins une plaque monobloc (1, 10, 21, 31, 41, 51) traversée par un ensemble d'ouvertures (2, 12, 22, 32, 42, 52), pour l'ensemble des crayons (5, 45) et des tubes-guides (6) de l'assemblage.

2.- Grille-entretoise suivant la revendication 1, caractérisée par le fait qu'elle est constituée par une seule plaque monobloc (1).

3.- Grille-entretoise suivant la revendication 2, caractérisée par le fait que la plaque (1) a une épaisseur pouvant aller jusqu'à 70 mm.

4.- Grille-entretoise suivant l'une des revendications 2 et 3, caractérisée par le fait que la plaque monobloc (1) est en alliage de zirconium.

5.- Grille-entretoise suivant la revendication 1, caractérisée par le fait qu'elle comporte au moins deux plaques monobloc (21a, 21b, 21c) disposées parallèlement l'une par rapport à l'autre et à une certaine distance relative h pouvant aller jusqu'à 70 mm dans une direction perpendiculaire aux plaques (21a, 21b), les logements (22) des plaques (21a, 21b, 21c) étant disposés suivant des réseaux se déduisant les uns des autres par une translation dans une direc tion perpendiculaire aux plaques (21a, 21b, 21c).

6.- Grille-entretoise suivant la revendication 5, caractérisée par le fait que les plaques (21a, 21b et 21c) sont reliées entre elles par des plaquettes (23) fixées sur les côtés latéraux de ces plaques (21a, 21b, 21c).

7.- Grille-entretoise suivant la revendication 6, caractérisée par le fait que les plaques (21a, 21b, 21c) sont reliées entre elles par un tube (23') dont la section correspond à celle des plaques, fixé sur les côtés latéraux de ces plaques.

8.- Grille-entretoise suivant l'une quelconque des revendications 6 et 7, caractérisée par le fait que les plaquettes (23) ou le tube (23') sont fixés sur les côtés latéraux des plaques (21a, 21b, 21c) par des soudures effectuées à travers l'épaisseur des plaquettes (23) ou le tube (23'), depuis leur face opposée aux côtés latéraux des plaques (21a, 21b, 21c).

9.- Grille-entretoise suivant la revendication 7, caractérisée par le fait que le tube (23') est relié aux plaques (21a, 21b, 21c) par des déformations de sa paroi à l'intérieur de logements (60) usinés dans les plaques, sur leurs côtés latéraux.

10.- Grille-entretoise suivant la revendication 5, caractérisée par le fait que les plaques (21a, 21b, 21c) sont reliées entre elles par des cornières (30) fixées aux plaques (21a, 21b, 21c) au niveau d'angles en position correspondante de ces plaques (21a, 21b, 21c).

11.- Grille-entretoise suivant l'une quelconque des revendications 1 à 10, caractérisée par le fait qu'elle comporte une ceinture (56) d'une forme facilitant la manutention de l'assemblage combustible.

12.- Grille-entretoise suivant la revendication 11, caractérisée par le fait que la ceinture (56) a une forme permettant le positionnement de l'assemblage correspondant dans le coeur du réacteur et l'absorption de dilatations différentielles avec les assemblages voisins.

13.- Grille-entretoise suivant la revendication 1, caractérisée par le fait que la plaque monobloc (31) est traversée par des ouvertures de passage d'eau (33), en plus des logements (32) des crayons combustibles et des tubes-guides de l'assemblage.

14.- Grille-entretoise suivant la revendication 13, caractérisée par le fait que les logements (32) des crayons combustibles et des tubes-guides et les trous de passage d'eau (33) sont réalisés par poinçonnage de la plaque (31) et comportent des parties (35, 37) repoussées en dehors du plan de la plaque (31).

15.- Grille-entretoise suivant la revendication 14, caractérisée par le fait que les parties repoussées (35) des logements (32) des crayons combustibles constituent des dispositifs d'appui des crayons.

16.- Grille-entretoise suivant la revendication 14, caractérisée par le fait que les parties repoussées (37) des trous de passage d'eau (33) constituent des ailettes de déflexion et de mélange du flux d'eau de refroidissement (36) traversant l'assemblage combustible.

17.- Grille-entretoise suivant la revendication 1, caractérisée par le fait qu'au niveau des logements (42) des crayons combustibles (45) traversant la plaque (41), cette plaque (41) présente des découpes (43) délimitant des languettes déformables (44) qui peuvent être repliées vers l'extérieur pour per mettre la mise en place d'un crayon (45) dans l'ouverture (42) et replacée dans le plan de la plaque (41), au niveau d'une gorge (47) prévue dans le crayon (45), pour assurer l'immobilisation axiale de ce crayon.

18.- Grille-entretoise suivant la revendication 1, caractérisée par le fait que la plaque (51) est pliée, au voisinage de ses bords, pour constituer une ceinture (56) entourant la grille-entretoise sur toute sa périphérie.

19.- Grille-entretoise suivant la revendication 1, caractérisée par le fait qu'une ceinture (57) est rapportée et soudée à la périphérie de la plaque (51'), pour constituer la ceinture de la grille-entretoise.

20.- Grille-entretoise suivant la revendication 1, caractérisée par le fait que le réseau des logements (2) des crayons combustibles (5) dans la plaque (1) est un réseau à mailles carrées.

21.- Grille-entretoise suivant la revendication 1, caractérisée par le fait que le réseau des logements (12) des crayons combustibles (5) dans la plaque (10) est un réseau à mailles triangulaires.

22.- Grille-entretoise suivant l'une quelconque des revendications 20 et 21, caractérisée par le fait que les ouvertures (2, 12) constituent les cellules d'une grille monobloc dont les parois sont usinées dans le métal de la plaque (1, 10) et comportent des bossettes d'appui (4, 14) pour un crayon combustible (5) destiné à être mis en place dans une cellule (2, 12) correspondante.

23.- Grille-entretoise suivant la revendication 22, caractérisée par le fait que les bossettes (4, 14) ont une forme profilée dans la direction perpendiculaire à la plaque (1, 10) correspondant à la direction de circulation de l'eau de refroidissement du réacteur, dans l'assemblage combustible.

24.- Grille-entretoise suivant la revendication 23, caractérisée par le fait que les bossettes (4) présentent une surface projetée dans le plan de la plaque (1) la plus faible possible afin de faciliter l'écoulement de l'eau de refroidissement du réacteur.

25.- Grille-entretoise suivant l'une quelconque des revendications 23 et 24, caractérisée par le fait qu'une partie seulement des parois (13) des cellules de la grille monobloc comporte des bossettes d'appui (14) pour les crayons combustibles (5).

26.- Grille-entretoise suivant la revendication 5, caractérisée par le fait que l'une au moins des plaques (21a, 21b, 21c) constitue un réseau porte-ailettes de mélange (62, 63).

27.- Grille-entretoise suivant la revendication 26, caractérisée par le fait que le réseau porte-ailettes (62, 63) de la plaque (21a) est disposé sur un seul niveau.

28.- Grille-entretoise suivant la revendication 27, caractérisée par le fait que le réseau porte-ailettes (62, 63) est disposé sur au moins deux niveaux.

0296018

FIG.1

FIG.2

0296018

FIG_2a

FIG_2b

0296018

FIG.2c

FIG.5

0296018

FIG. 3

FIG. 4

0296018

**FIG. 4a**

**FIG. 4b**

**FIG. 6**

**FIG. 7a**

**FIG. 7b**

0296018

FIG. 8

FIG. 10

0296018

**FIG.9**

**FIG.9a**

**FIG.9b**

0296018

**FIG.11**

**FIG.12**

FIG.16a

FIG.16b

FIG.15

FIG.15a

FIG.13

FIG.14

FIG.17

**FIG. 18**

**FIG. 18a**

**FIG. 18b**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 162 641  (SIEMENS AG)<br>* Page 1, alinéa 1; page 2, dernier alinéa - page 3, ligne 19; page 4, lignes 22-37; figure * | 1,4-7,9,11,13, 20-22, 26,27 | G 21 C    3/34 |
| A |  | 23,24 |  |
|  | --- |  |  |
| A | FR-A-2 368 117  (KWU AG)<br>* Page 5, lignes 12-38; page 8, lignes 12-37; figures 1-3,8 * | 1,2,21-25 |  |
|  | --- |  |  |
| A | US-A-4 312 706  (SNYDER, Jr.)<br>* Colonne 3, ligne 23 - colonne 4, ligne 4; figures 1,2 * | 1,2,21, 22 |  |
|  | ----- |  |  |

**DOMAINES TECHNIQUES RECHERCHES (Int. Cl.4)**

G 21 C    3/00

Le présent rapport a été établi pour toutes les revendications

| Lieu de la recherche | Date d'achèvement de la recherche | Examinateur |
|---|---|---|
| LA HAYE | 07-09-1988 | JANDL F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................
& : membre de la même famille, document correspondant

EPO FORM 1503 03.82 (P0402)